**Europäisches Patentamt**

**European Patent Office**

**Office européen des brevets**

(19)

(11) Numéro de publication: **0 082 030**
**A1**

## (12) DEMANDE DE BREVET EUROPEEN

(21) Numéro de dépôt: **82402031.7**

(51) Int. Cl.³: **A 01 G 25/16**

(22) Date de dépôt: **04.11.82**

(30) Priorité: **05.11.81 FR 8120720**

(43) Date de publication de la demande: **22.06.83**
**Bulletin 83/25**

(84) Etats contractants désignés: **AT BE CH DE FR GB IT LI LU NL SE**

(71) Demandeur: **Houzel, François-Xavier, 78, avenue Raymond Poincaré, F-75116 Paris (FR)**
Demandeur: **Piat, Moise, 17, rue Saint Philippe, F-06000 Nice (FR)**

(72) Inventeur: **Houzel, François-Xavier, 78, avenue Raymond Poincaré, F-75116 Paris (FR)**
Inventeur: **Piat, Moise, 17, rue Saint Philippe, F-06000 Nice (FR)**

(54) **Dispositif automatique de distribution de liquide appliqué notamment à l'irrigation.**

(57) Dispositif automatique de remplissage et vidage alternés de récipients montés sur des rampes associées deux à deux, chaque couple de rampes étant commandé par un distributeur (1) de telle sorte que lorsqu'une rampe (15) se remplit, l'autre se vidange et vice versa.

L'invention s'applique notamment à l'irrigation.

EP 0 082 030 A1

<u>. Dispositif automatique de distribution de liquide appliqué</u>
<u>notamment à l'irrigation.</u>

Dans le procédé d'irrigation goutte à goutte actuellement utilisé, la distribution de liquide s'effectue au moyen de rampes portant des goutteurs à l'intérieur desquels est ménagée, par différents moyens mécaniques, une perte de charge, de manière à obtenir un écoulement de très faible débit.

Un des principaux inconvénients du procédé vient de la grande sensibilité des goutteurs à l'obstruction en raison de la petite dimension des orifices et conduits d'écoulement.

La présente invention a pour objet d'éliminer cet inconvénient en apportant en outre, un certain nombre d'avantages.

L'invention se rapporte à un dispositif de distribution de liquides dans lequel les rampes sont associées deux à deux pour fonctionner alternativement.

Chaque couple de rampes est commandé par un distributeur à pistons à deux positions. L'une d'elle correspond au remplissage d'une rampe pendant que l'autre rampe se vidange et vice-versa.

Tout le long des rampes sont disposés des récipients qui, lorsque la rampe est alimentée, se remplissent successivement les une après les autres. Le dernier d'entre eux est relié au distributeur pour provoquer à l'issue de son propre remplissage, le changement de position de ce distributeur.

Chaque récipient comprend des dispositifs et est alimenté de manière que la vidange ne puisse s'effectuer qu'à l'issue du remplissage de tous les récipients d'une même rampe.

En plaçant une vanne au départ de chacune des deux rampes jumelées, on peut faire varier leur débit d'alimentation et donc le temps de remplissage afin de régler précisément le cycle des distributions volumétriques en fonction des besoins.

Naturellement, le temps de remplissage de chacune des deux rampes sera réglé de manière à être supérieur au temps de vidange de l'autre et vice-versa.

L'écoulement du liquide s'effectue au moyen de tubes borgnes fixés par simple enmanchement sur les orifices de sortie des récipients. Ces tubes comportent un certain nombre de trous munis chacun d'un bec verseur qui évite le ruissellement du liquide le long du tube dans le cas où celui-ci ne serait pas parfaitement horizontal.

Chaque orifice d'écoulement représentant un goutteur, on voit que chaque récipient correspond à plusieurs goutteurs, ce qui limite le nombre de récipients et donc le coût de l'installation.

On comprend aussi que la vidange du récipient s'effectuant par simple gravité, la pression est extrêmement faible, de l'ordre de 0,01 bar, et qu'il est possible, ainsi, de ménager des orifices d'écoulement d'un diamètre suffisamment grand pour éviter ou limiter leur obstruction. Enfin, les tubes portant les orifices d'écoulement étant facilement démontables, il est possible de ménager, entre les rangées de récipients de larges allées libérées de toute emprise pour effectuer la récolte avec des engins mécaniques. Ceci est un avantage important, particulièrement en maraîchage.

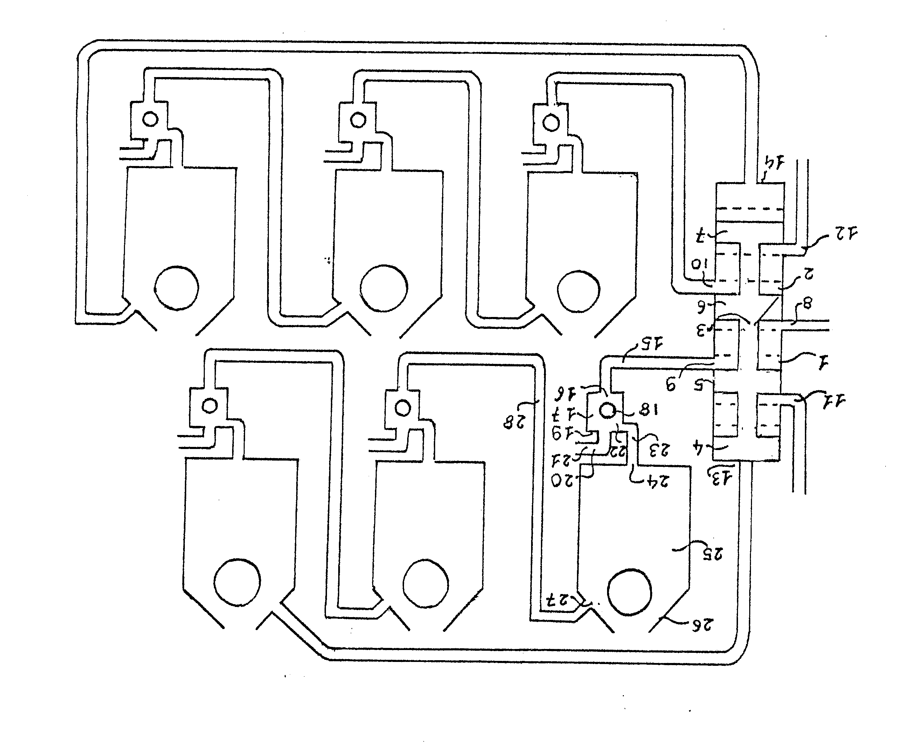

L'invention sera mieux comprise si on se réfère à la figure dans laquelle le distributeur de commande 1 comporte une enveloppe 2 à l'intérieur de laquelle coulisse un tiroir 3 comportant quatre pistons 4, 5, 6 et 7 et qui comporte, en outre, un certain nombre d'orifices, à savoir : L'orifice 8 qui est celui par lequel le liquide arrive sous pression. Les orifices 9 et 10 sont ceux qui alimentent respectivement chacune des deux rampes. Les orifices 11 et 12 sont des vidanges à l'air libre. Enfin, les orifices 13 et 14, logés dans les flasques d'extrémité, permettent de faire coulisser le tiroir 3 à l'intérieur de 2.

On voit ainsi que, dans la position de la figure, le liquide arrivant en 8 alimente la première rampe tandis que la seconde est en communication avec l'air libre par l'orifice 12.

Lorsque la pression s'applique, par l'orifice 13 sur le tiroir 3, celui-ci coulisse pour se placer dans l'autre position dans laquelle les pistons sont figurés en pointillés. On voit que c'est alors la deuxième rampe qui est alimentée tandis que la première est mise en communication avec l'air libre par l'orifice 11.

La première rampe est constituée d'un tuyau 15 qui débouche en 16 dans la partie inférieure d'un compartiment 17 à l'intérieur duquel est placée une bille 18 de densité supérieure à celle du liquide utilisé. La partie supérieure 19 formant plafond du compartiment 17 comporte en son axe, un orifice 20 prolongé vers l'extérieur par un conduit 21 assurant l'écoulement du liquide vers son utilisation.

L'orifice 20 forme siège d'étanchéité pour la bille 18.

La partie supérieure du compartiment 17 comporte un autre orifice 22 se prolongeant à l'extérieur par un conduit 23 débouchant à la partie inférieure 24 du récipient 25 et cette partie inférieure 24 est toujours placée à un niveau supérieur par rapport à 19 et 20.

Le récipient est muni d'un dispositif classique assurant l'évacuation de l'air comme, par exemple, une bille de très faible densité qui vient boucher le trou ménagé dans la partie supérieure 26 lorsque le remplissage est terminé. Cette partie supérieure 26 comporte un orifice 27 qui se prolonge par un conduit 28 qui va alimenter le récipient suivant de la manière qui vient d'être décrite et ainsi de suite. On voit, sur la figure, que le conduit sortant de la partie supérieure du dernier compartiment débouche en 13.

Le fonctionnement du dispositif est le suivant : lorsque le liquide pénètre en 16 dans le compartiment 17, il exerce une poussée de bas en haut sur la partie inférieure de la bille 18 et la plaque sur le siège d'étanchéité de l'orifice 20 tandis que le flux qui alimente l'orifice 22 l'y maintient pendant toute la durée du remplissage de la rampe, puisque ce flux ne s'interrompt qu'à l'issue de ce remplissage.

Le liquide circule ainsi en 23 pour alimenter le premier récipient puis, de la même manière, le second puis le troisième etc...

Lorsque le dernier récipient est rempli, la pression du liquide provoque le changement de position du distributeur 10 et c'est alors l'autre rampe qui est alimentée en liquide tandis que la première qui vient d'être remplie est en communication avec l'air libre par l'orifice 11. La pression y tombe alors à zéro, toutes les billes, de par leur densité, tombent au fond de leurs compartiments respectifs, libérant ainsi tous les orifices 20 par lesquels le liquide contenu dans les récipients va se vidanger vers son utilisation en 20 et 21 après avoir circulé par le conduit 23 et pénétré en 17 par l'orifice 22.

L'orifice 16, placé dans l'axe du compartiment 27, comporte également un siège d'étanchéité sur lequel la bille 18 vient se poser lors de la vidange pour empêcher que cette vidange ne s'effectue par le récipient précédent qui se trouverait, éventuellement à un niveau inférieur par suite de la déclivité du terrain.

Une vanne placée en tête de la rampe, permet d'en régler le débit de remplissage afin de régler la fréquence des distributions.

Les distributeurs étant branchés en dérivation sur la canalisation principale, on peut, naturellement, en disposer un grand nombre avec les récipients correspondants de manière à couvrir la totalité de la parcelle à irriguer.

On voit, par la description ci-dessus, que le système apporte un grand nombre d'autres avantages par rapport au système des goutteurs traditionnels.

En premier lieu, le système assure une distribution volumétrique de très grande précision, répondant aux besoins exacts des plantes. En effet, chaque point d'arrosage déverse une quantité fixe à des intervalles de temps qu'il est possible de régler précisément. Pour éviter que cet intervalle de temps ne subisse des modifications dûes aux variations de pression pouvant survenir dans l'alimentation générale de tête, on peut placer des régulateurs de pression en amont de chaque distributeur.

Il n'y a plus, alors, de réglage ni de surveillance à effectuer puisque chaque couple de rampes fonctionne dans des conditions rigoureusement prédéterminées et donc toujours identiques.

On voit aussi que les pertes de charge qui interviennent dans chaque récipient lors de son remplissage, dans la traversée des récipients précédents et aussi dans la tuyauterie qui relie les récipients entre eux n'a aucune importance puisque le réglage porte uniquement sur le temps de remplissage d'une rampe avec tous ses récipients.

Étant donné également que le liquide circule en permanence à l'intérieur d'une rampe en cours de remplissage et que le distributeur est construit pour coulisser sous une très faible poussée, la pression reste toujours très basse pendant la phase de remplissage d'une rampe. Elle est pratiquement nulle pendant la phase de vidange.

Ces différentes données permettent d'utiliser, pour la confection des rampes, du tuyau souple basse pression de faible diamètre, très bon marché et de raccorder ce tuyau sur les récipients par simple enmanchement. Il en résulte une économie considérable d'infrastructure tant sur les matériaux que sur la main d'oeuvre.

Pour assurer à la fois la stabilité des récipients en évitant qu'ils ne culbutent sous l'effet du vent et aussi pour qu'ils puissent être installés en position sensiblement verticale assurant le meilleur fonctionnement possible, chacun d'eux sera muni, à sa partie inférieure, de pointes destinées à être fichées dans le sol.

L'invention décrite se rapporte principalement à l'irrigation en apportant un certain nombre d'avantages nouveaux par rapport au système tradi-tionnel du goutte à goutte.

Toutefois, elle peut trouver d'autres applications, en particulier pour le remplissage précis et automatique de bidons, fûts etc... de différents liquides.

Dans ce cas, les récipients précédemment décrits constitueront des doseurs étalonnés se vidangeant dans les bidons à remplir.

Pour assurer une grande souplesse d'utilisation et permettre le remplissage de bidons ou fûts de différentes contenances, les doseurs étalons pourront être de capacité variable et réglable. On peut, pour cela, utiliser différents dispositifs connus comme par exemple de réaliser le doseur étalon en deux parties téléscopiques avec un système de règle graduée et indicateur de capacité pour chaque position.

REVENDICATIONS

1. Dispositif automatique de distribution de liquide pour irrigation, caractérisé par le fait que les rampes sont associées deux à deux et commandées de manière alternative par un distributeur à pistons comportant deux positions qui correspondent respectivement au remplissage de la première rampe pendant que la deuxième se vidange et à la situation inverse dans laquelle c'est la deuxième rampe, préalablement vidangée, qui se remplit pendant que la première se vidange à son tour.

2. Dispositif automatique de distribution de liquide pour irrigation selon la revendication 1 dans lequel chaque rampe porte une série de récipients qui se remplissent les uns après les autres, chacun d'eux comportant un dispositif particulier par lequel il est rendu étanche pendant son remplissage et que cette étanchéité est maintenue pendant toute la phase de remplissage de tous les récipients d'une même rampe.

3. Dispositif automatique de distribution de liquide pour irrigation selon la revendication 2 dans lequel le dispositif particulier qui assure l'étanchéité des récipients est constitué par un boîtier contenant une bille de densité supérieure à celle du liquide et comportant, à sa partie supérieure, deux orifices dont l'un, muni d'un siège d'étanchéité, se prolonge vers l'extérieur par le conduit d'utilisation et l'autre alimente le récipient par sa partie inférieure de telle sorte que le liquide, entrant dans la partie inférieure du boîtier, exerce sur la bille une poussée de bas en haut qui la plaque sur le siège d'étanchéité, tandis que le récipient se remplit par l'autre orifice et que le flux ainsi créé maintient la bille sur son siège de manière étanche.

4. Dispositif automatique de distribution de liquide pour irrigation selon la revendication 2 et 3 dans lequel chaque récipient comporte, à sa partie supérieure, un orifice se prolongeant vers l'extérieur par un conduit alimentant le récipient suivant, chacun des récipients étant muni d'un système quelconque d'évacuation de l'air.

5. Dispositif automatique de distribution de liquide pour irrigation selon les revendications 1 et 4 dans lequel, après avoir rempli le dernier récipient d'une rampe, le flux agit sur la tige du distributeur pour provoquer son coulissement et inverser le sens de circulation du liquide et que ce distributeur est aménagé de telle sorte que c'est la deuxième rampe qui entre en remplissage tandis que la première est mise en communication avec l'air libre, que la pression y tombe à zéro, que toutes les billes, de par leur densité, tombent au fond de leurs boîtiers respectifs et qu'ainsi tous les récipients se vidangent en même temps pour alimenter les conduits d'utilisation.

6. Dispositif automatique de distribution de liquide pour irrigation selon les revendications 3 et 5 dans lequel l'orifice par lequel le liquide entre dans le boitier à bille comporte, à l'intérieur de celui-ci, un siège d'étanchéité, de manière à ce que la bille vienne s'y poser lors de la vidange, empêchant que celle-ci puisse s'effectuer par le récipient précédent dans le cas où ce récipient serait placé à un niveau inférieur par suite de la déclivité du terrain.

7. Dispositif automatique de distribution de liquide pour irrigation selon les revendications 2 et 5 dans lequel la ou les sorties de chaque récipient vers l'utilisation du liquide sont aménagées de façon à recevoir un ou plusieurs trous borgnes, percés de trous jouant chacun le rôle d'un goutteur, espacés selon les nécessités de la culture, et munis chacun d'un bec verseur obligeant l'écoulement à se faire à l'endroit du trou.

8. Dispositif automatique de distribution de liquide pour irrigation selon les revendications 1 et 2 dans lequel chaque départ de rampe est muni d'une vanne par laquelle il est possible de régler le temps de remplissage de ladite rampe de manière à organiser le rythme des distributions de liquide en fonction des besoins de la culture.

9. Dispositif automatique de distribution de liquide pour irrigation selon la revendication 2 dans lequel chaque récipient comporte, à sa partie inférieure, des pointes destinées à être fichées dans le sol afin d'assurer la stabilité du récipient et son maintien en position verticale.

10: Dispositif automatique de distribution de liquide pour irrigation dans lequel les récipients étant utilisés comme doseurs de précision pour le remplissage de bidons de liquides quelconques, ces récipients sont de contenance réglable au moyen d'un dispositif quelconque de type connu comme, par exemple, l'enmanchement téléscopique des deux éléments cylindriques constituant le récipient avec système de graduation indiquant la contenance pour chaque position.

1/1

0082030

Office européen
des brevets

**RAPPORT DE RECHERCHE EUROPEENNE**

Numéro de la demande

EP 82 40 2031

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-4 178 954 (KLIEVES) | | A 01 G 25/16 |
| A | US-A-2 714 388 (MALTHANER) | | |

| | DOMAINES TECHNIQUES RECHERCHES (Int. Cl. ³) |
|---|---|
| | A 01 G |

Le présent rapport de recherche a été établi pour toutes les revendications

| Lieu de la recherche | Date d'achèvement de la recherche | Examinateur |
|---|---|---|
| LA HAYE | 11-03-1983 | HERYGERS J.J. |